# EUROPÄISCHE PATENTSCHRIFT

(11) **EP 3 108 168 B1**
(45) Veröffentlichungstag und Bekanntmachung des Hinweises auf die Patenterteilung: **08.11.2017**
(21) Anmeldenummer: 15708111.8
(22) Anmeldetag: 28.01.2015
(51) Int. Cl.: F16K 31/44, F16K 47/02, F16K 3/26, F16K 17/30

(54) **SICHERHEITSVENTIL**
SAFETY VALVE
SOUPAPE DE SÉCURITÉ

(30) Priorität: 19.02.2014 DE 202014001442 U
(43) Veröffentlichungstag der Anmeldung: 28.12.2016
(73) Patentinhaber: Neoperl GmbH, 79379 Müllheim (DE)
(72) Erfinder: MEYER, Burkhard, 79312 Emmendingen (DE)
(74) Vertreter: Börjes-Pestalozza, Henrich
(86) Internationale Anmeldenummer: PCT/EP2015/000158
(87) Internationale Veröffentlichungsnummer: WO 2015/124258

(56) Entgegenhaltungen:
- WO-A1-98/47623
- WO-A1-2011/136999
- DE-U- 7 318 404
- FR-A- 586 854
- FR-A- 1 097 717
- US-A- 4 195 658

## Beschreibung

Die Erfindung betrifft ein Sicherheitsventil mit einem Ventilgehäuse, in dessen Gehäuseinnenraum ein Absperrkörper vorgesehen ist, der mittels wenigstens einem elastischen Rückhalteelement gegen die Kraft eines durch das Ventilgehäuse durchströmenden Mediums in einer Offenstellung des Sicherheitsventils gehalten ist.

In der WO 2011/136999 A1 ist ein Druckregelventil beschrieben mit einem Ventilgehäuse, in dessen Innenraum ein Absperrkörper vorgesehen ist, der mittels eines elastischen Rückhalteelements gegen die Kraft eines durch das Ventilgehäuse durchströmenden Fluids in einer Offenstellung gehalten ist. Der Absperrkörper ist innerhalb des Ventilgehäuses derart verschiebbar, dass dieser Absperrkörper bei Druckabfall auf seine Abströmseite gegen einen Schließkörper in eine Schließstellung des Druckregelventils bewegt wird.

In der US 4 195 658 A ist ein Sicherheitsventil zum Verhindern des Entweichens eines Gases aus einem geschlossenen System vorbekannt. Das Sicherheitsventil weist einen kolbenartigen Stopfen mit einem Kopf an einem Ende und einem stabförmigen Körper am anderen Ende, ein Gehäuse mit einer Einlasskammer, welche so bemessen ist, dass der Stopfen in die Einlasskammer eintreten kann, wodurch der Fluss des Gases durch eine Austrittskammer verhindert wird, auf. Bei Eintreten eines Druckabfalls, beispielsweise in Folge eines Leitungsbruches, wird das Sicherheitsventil mittels einer durch ein Federelement erzeugten Federkraft geschlossen, sodass kein Gas aus der gebrochenen Leitung austreten kann.

Solche Sicherheitsventile dienen regelmäßig zum automatischen Absperren einer von einem Medium, insbesondere Wasser, durchströmbaren Leitung. Der Begriff Leitung bedeutet dabei im erfindungsgemäßen Sinn, jedes Element aus beliebiger Form und aus beliebigem Material bestehend, durch welches ein Medium, insbesondere ein Fluid, beispielsweise Wasser, hindurchgeleitet werden kann. Ein solches, zum Hindurchleiten eines Fluids bestimmtes Element kann ein Schlauch, ein Rohr oder eine Rohrleitung oder ein Bestandteil eines Schlauches, eines Rohres oder einer Rohrleitung sein, - gemeint sein kann ferner eine Armatur oder ein Ventil, beispielsweise ein Eckventil.

Derartige Sicherheitsventile zum automatischen Absperren von durchströmbaren Leitungen sind aus dem Stand der Technik bekannt und werden beispielsweise im Sanitärbereich dazu verwendet, Schäden durch austretendes Wasser zu unterbinden. Es kann sich dabei um die Leckage von Leitungen, aber auch um komplett unterbrochene Leitungen, handeln, wie es beispielsweise bei einem geplatzten Schlauch der Fall ist.

Solche Sicherheitsventile sind zumindest im Sanitärbereich üblicherweise mit Schläuchen, Rohren oder Rohrleitungen verbunden und dienen dazu, den Fluss eines Fluids, beispielsweise von Wasser, zu unterbrechen, sobald der Volumenstrom des Fluids durch das Ventil einen bestimmten Wert überschritten hat. Es ist für diesen Zweck üblicherweise ein Absperrkörper im Inneren solcher Ventile vorgesehen, der regelmäßig mittels einer Feder gegen die Kraft des durchströmenden Fluids wirkt, wobei die Kraft, die gegen das Fluid wirkt, durch die Federkonstante der eingesetzten Feder festlegbar und somit auch variabel ist. Die aus dem Stand der Technik bekannten Sicherheitsventile zum automatischen Absperren von Leitungen weisen üblicherweise ein geeignetes Element, beispielsweise einen Stößel, auf, gegen das der Absperrkörper bei Überschreitung des Volumenstroms aufsitzt und somit ein Verschließen der Fluidleitung ermöglicht.

Im Falle von ganz oder auch nur teilweise unterbrochenen Leitungen kommt es zur Ausbildung einer Druckdifferenz in Bezug auf die Bereiche oberhalb und unterhalb des Absperrkörpers, und damit einhergehend zum Absperren durch das Sicherheitsventil, wodurch der weitere Austritt des Mediums aus der Leitung unterbunden wird und Schäden durch unkontrolliert austretendes Medium verhindert werden. Die aus dem Stand der Technik bekannten Sicherheitsventile funktionieren ebenso nach diesem Prinzip, wobei nach dem Auslösen, d.h. dem Absperren durch das Sicherheitsventil, ein Druckausgleich erfolgen muss, damit der ordnungsgemäße Fluss des Mediums nach Wiederherstellung der zuvor ganz oder teilweise unterbrochenen Leitung wieder erfolgen kann.

Es ist ebenfalls bekannt, dass solche Sicherheitsventile auch ohne eine erzeugte Druckdifferenz, d.h. auch ohne Überschreitung des Volumenstroms, auslösen können. Dies trifft insbesondere bei Erstinstallationen oder anderen Arbeiten am Leitungssystem zu, bei denen ein Lufteintritt eine Auslösung des Sicherheitsventils verursachen kann, obgleich die betroffene Leitung intakt ist.

Um diesen Druckausgleich zu erzeugen, weisen die aus dem Stand der Technik bekannten Sicherheitsventile jedoch den Nachteil auf, dass der Druckausgleich üblicherweise durch Belüftung des Sicherheitsventils, üblicherweise gegen den vorhandenen Atmosphärendruck, erfolgen muss. Dazu ist das Sicherheitsventil vom bestehenden Leitungsnetz, an dem es angeschlossen ist, zu entfernen und nach erfolgtem Druckausgleich wieder anzubringen. Von Nachteil ist in diesem Zusammenhang ferner, dass für Demontage und Montage solcher Sicherheitsventile entsprechende Werkzeuge benötigt werden und damit auch ein nicht unerheblicher Zeitaufwand erforderlich wird. Zusätzlichen Zeitaufwand bedeutet es bei den aus dem Stand der Technik vorbekannten Sicherheitsventilen, dass zudem das zulaufseitige Ventil, das beispielsweise als Eckventil ausgestaltet sein kann, vor der Demontage zu verschließen ist, um unkontrollierten Austritt des Mediums zu verhindern und nach Montage erneut geöffnet werden muss.

Es ist des Weiteren auch möglich, dass Demontage und Montage nur durch geeignetes Fachpersonal ausgeführt werden können, wodurch dem Endverbraucher nicht unerhebliche Kosten entstehen können. Demontage und Montage können für den Endverbraucher zudem bei Fehlverhalten eine körperliche Gefahr aufgrund von erhöhtem Druck darstellen. Die aus dem Stand der Technik bekannten Sicherheitsventile weisen weiterhin die nachteilige Ausgestaltung auf, dass im Fall einer schlagartigen Druckänderung, d.h. einer schlagartigen Absperrung der Leitung, der zum Absperren eingesetzte Absperrkörper derart gegen das den Absperrkörper wirkende und somit das Verschließen sicherstellende Element, das beispielsweise als Stößel ausgebildet sein kann, einem der Fließrichtung des Mediums entgegenwirkenden Impuls erfährt, so dass der Verschluss zumindest kurzzeitig nicht vollständig gewährleistet ist, und somit Medium trotz teilweiser oder ganz unterbrochener Leitung aus dem Absperrventil entweichen und somit unter Umständen einen Schaden anrichten kann.

Der vorliegenden Erfindung liegt daher insbesondere die Aufgabe zugrunde, ein bei unterbrochenen Leitungen automatisch abstellendes Sicherheitsventil zu schaffen, welches ein zuverlässiges Schließen bei ganz oder zumindest teilweise unterbrochener Leitung gewährleistet und das zudem hinsichtlich der Wiederinbetriebnahme nach funktionsgemäßem Absperren von ganz oder zumindest teilweise unterbrochenen Leitungen sich durch eine deutlich vereinfachte Handhabung auszeichnet, die vorzugsweise auch werkzeuglos erfolgen kann.

Die erfindungsgemäße Lösung dieser Aufgabe besteht bei dem Sicherheitsventil der eingangs erwähnten Art insbesondere in den Merkmalen des geltenden Anspruches 1.

Das erfindungsgemäße Sicherheitsventil hat ein Ventilgehäuse, in dessen Gehäuseinnenraum ein Absperrkörper vorgesehen ist. Dieser Absperrkörper ist mittels wenigstens einem elastischen Rückhalteelement gegen die Kraft eines durch das Ventilgehäuse durchströmenden Mediums in einer Offenstellung des Sicherheitsventils gehalten, in der das Medium eine Ventilöffnung im Absperrkörper durchströmt. Der Absperrkörper ist im Ventilgehäuse derart verschiebbar, dass dieser Absperrkörper sich bei einem insbesondere störungsbedingten Druckabfall auf seiner Abströmseite gegen einen Schließkörper in eine Schließstellung des Sicherheitsventils bewegt. Ein solcher Druckabfall auf der Abströmseite des Absperrkörpers kann sich beispielsweise beim Platzen einer abströmseitig vorgesehenen Schlauchleitung oder dergleichen Leckage ergeben. In der Schließstellung des Sicherheitsventils verschließt der von mindestens einem elastischen Andruckelement beaufschlagte Schließkörper die im Absperrkörper vorgesehene Ventilöffnung. Das erfindungsgemäße Sicherheitsventil hat einen By-Pass-Kanal, der in der Schließstellung des Sicherheitsventils derart öffenbar ist, dass er die Zuströmseite des Absperrkörpers mit dessen Abströmseite verbindet, bis der Absperrkörper sich bei erfolgtem Druckausgleich über den auch als Entlastungskanal oder Verbindungskanal zu bezeichnenden By-Pass-Kanal in die Offenstellung bewegt. Das erfindungsgemäße Sicherheitsventil kann nun mit seinem Ventilgehäuse am Auslaufende einer Versorgungsleitung angeordnet oder in eine solche Leitung zwischengeschaltet werden. In dem Ventilgehäuse ist der Absperrkörper vorzugsweise in Gehäuselängsrichtung mittels wenigstens einem elastischen Rückhalteelement gegen die Kraft eines durch das Ventilgehäuse durchströmenden Mediums in einer Offenstellung des Sicherheitsventils gehalten. Der Absperrkörper, der vorzugsweise gegenüber der Gehäuseinnenseite des Ventilgehäuses abgedichtet ist, weist zumindest eine Ventilöffnung auf, die das Medium in der Offenstellung des Sicherheitsventils durchströmen kann. Bei einem Druckabfall auf der Abströmseite wird der Absperrkörper von dem auf der Zuströmseite vorherrschenden Druck derart gegen den Schließkörper in eine Schließstellung des Sicherheitsventils bewegt, dass der seinerseits von mindestens einem elastischen Andruckelement beaufschlagte Schließkörper die Ventilöffnung im Absperrkörper dicht verschließen kann. Dieser, in Schließstellung des Sicherheitsventils die Ventilöffnung verschließende Schließkörper wirkt praktisch als Dämpferkolben, der innerhalb des Ventilgehäuses mittels einem elastischen Andruckelement verschiebbar und als Dämpferkolben wirksam ist. Wurde das erfindungsgemäße Sicherheitsventil einmal ausgelöst und in seine Schließstellung versetzt, verharrt das erfindungsgemäße Sicherheitsventil in dieser Schließstellung, bis über den By-Pass-Kanal zumindest ein Druckausgleich erfolgt. Zum Zwecke eines solchen Druckausgleichs ist der By-Pass-Kanal in der Schließstellung des Sicherheitsventils derart öffenbar, dass er die Zuströmseite des Absperrkörpers mit dessen Abströmseite verbindet. Sobald über den zeitweise zu öffnenden By-Pass-Kanal ein Druckausgleich zwischen der Zuströmseite und der Abströmseite des Absperrkörpers erfolgt ist, bewegt sich der Absperrkörper bei erfolgtem Druckausgleich in die Offenstellung des Sicherheitsventils. Hat sich der Absperrkörper wieder in die Offenstellung des Sicherheitsventils zurückbewegt, steht das erfindungsgemäße Sicherheitsventil für einen erneuten Auslösevorgang wieder zur Verfügung. Das mindestens eine Andruckelement des erfindungsgemäßen Sicherheitsventils ist mit seinem dem Absperrkörper abgewandten Teilbereich in einer im Gehäuseinnenraum des Ventilgehäuses angeordneten Führungshülse verschieblich geführt.

Eine bevorzugte Ausführungsform gemäß der Erfindung sieht vor, dass das wenigstens eine Rückhalteelement, welches den Absperrkörper gegen die Kraft des durch das Ventilgehäuse durchströmenden Mediums in der Offenstellung des Sicherheitsventils hält, als federelastisches Rückhalteelement ausgebildet ist. Dabei sieht eine besonders einfache und mit geringem Konstruktions- und Herstellungsaufwand verbundene Ausführungsform gemäß der Erfindung vor, dass das wenigstens eine Rückhalteelement als Wendelfeder ausgebildet ist.

Nach einem weiterbildenden Vorschlag gemäß der Erfindung ist vorgesehen, dass zusätzlich oder stattdessen auch das mindestens eine Andruckelement als federelastisches Rückhalteelement und vorzugsweise als Wendelfeder ausgebildet ist.

Damit das mindestens eine Andruckelement seine Dämpfungskraft auf den, die im Absperrkörper vorgesehene Ventilöffnung verschließenden Schließkörper ausüben kann, ist vorgesehen, dass das mindestens eine Andruckelement mit seinem dem Absperrkörper abgewandten Teilbereich in einer im Gehäuseinnenraum des Ventilgehäuses angeordneten Führungshülse verschieblich geführt ist.

Eine besonders kompakte Ausführungsform, die sich durch einen vergleichsweise geringen Außenumfang auszeichnen kann, sieht vor, dass das als Wendelfeder ausgestaltete Rückhalteelement die Führungshülse umgreift.

Damit die verschieblichen Bestandteile des erfindungsgemäßen: Sicherheitsventils funktionssicher geführt und funktionsgerecht betätigt werden können, ist es vorteilhaft, wenn die Ventilöffnung zentral im Absperrkörper und vorzugsweise koaxial zu dessen Absperrkörper-Längsachse angeordnet ist.

Der im erfindungsgemäßen Sicherheitsventil vorgesehene By-Pass-Kanal kann bis außerhalb des Ventilgehäuses geführt sein, wobei in diesen By-Pass-Kanal auch ein By-Pass-Ventil zwischenschaltbar ist. Eine besonders einfache und vorteilhafte Ausführungsform, die sich durch eine einfache und funktionssichere Handhabung auszeichnet, sieht demgegenüber vor, dass der By-Pass-Kanal drei Kanalabschnitte hat, von denen die mündungsseitigen Kanalabschnitte als Durchströmlöcher im Ventilgehäuse ausgebildet sind, wobei die mündungsseitigen Kanalabschnitte über einen dazwischenliegenden Kanalabschnitt verbindbar sind, den ein hülsenförmiges und auf dem Außenumfang des Ventilgehäuses verschieblich geführtes Schiebeelement be- oder umgrenzt. Wird dieses Schiebeelement am Außenumfang des Ventilgehäuses in die Kanal-Offenstellung des By-Pass-Kanals bewegt, werden die drei miteinander zusammenwirkenden Kanalabschnitte des By-Pass-Kanals derart miteinander verbunden, dass ein Druckausgleich zwischen der Zuströmseite und der Abströmseite des Absperrkörpers einstellt. Bei einem solchen Druckausgleich wird der Absperrkörper durch das auf ihn einwirkende elastische Rückhalteelement gegen die Kraft eines durch das Ventilgehäuse durchströmenden Mediums in die des Sicherheitsventils bewegt, in welcher Offenstellung der Absperrkörper bis zu einem erneuten Auslösen des Sicherheitsventils verbleibt.

Zweckmäßig ist es, wenn das Schiebeelement auf dem Außenumfang des Ventilgehäuses von der Kanal-Schließstellung gegen eine Rückstellkraft in die Kanal-Offenstellung des By-Pass-Kanals verschiebbar ist. Da das Schiebeelement bei dieser Ausführungsform von der Rückstellkraft stets wieder in die der Schließstellung des Sicherheitsventils entsprechende Position bewegt wird, werden Fehlbedienungen vermieden und das erfindungsgemäße Sicherheitsventil stets zum erneuten Auslösen bereitgehalten.

Um den mit der Konstruktion und Herstellung des erfindungsgemäßen Sicherheitsventils verbundenen Aufwand möglichst gering zu halten, ist es zweckmäßig, wenn auch das Rückstellelement als federelastisches Rückstellelement und vorzugsweise als Wendelfeder ausgebildet ist.

Eine besonders vorteilhafte Ausführungsform gemäß der Erfindung sieht vor, dass das vom Rückstellelement in die Kanal-Offenstellung bewegte Schiebeelement an einem Schiebeanschlag anschlägt. Da das vom Rückstellelement zurückbewegte Schiebeelement an dem Schiebeanschlag anschlägt, ist für den Anwender deutlich wahrnehmbar, wenn sich das Sicherheitsventil wieder in seiner Offenstellung befindet und das Sicherheitsventil für ein erneutes Auslösen bereitsteht.

Das erfindungsgemäße Sicherheitsventil lässt sich überall dort vorteilhaft einsetzen, wo die auf der Abströmseite des Sicherheitsventils angeordneten Leitungsabschnitte gegen ein unkontrolliertes Auslaufen des in der Leitung geführten Mediums in Folge eines Berstens oder dergleichen Leckage abgesichert sein müssen. Dabei sieht ein bevorzugtes Anwendungsbeispiel vor, dass das Ventilgehäuse zuströmseitig einen Armaturenanschluss und/oder abströmseitig einen Schlauchanschluss aufweist. Insbesondere ein abströmseitig vorgesehener und mit dem Schlauchanschluss des erfindungsgemäßen Sicherheitsventils verbundener Schlauch kann somit gegen eine unbeabsichtigte und unkontrollierte Leckage abgesichert werden.

Dabei ist es vorteilhaft, wenn das Ventilgehäuse an seinem zuströmseitigen Armaturenanschluss mit einer Versorgungsleitung und insbesondere mit einem wandseitigen Eckventil einer Versorgungsleitung verbunden ist.

Weiterbildungen gemäß der Erfindung ergeben sich aus den Ansprüchen in Verbindung mit der Beschreibung sowie den Zeichnungen. Nachstehend wird die Erfindung anhand vorteilhafter Ausführungsbeispiele noch näher beschrieben.

Es zeigt:

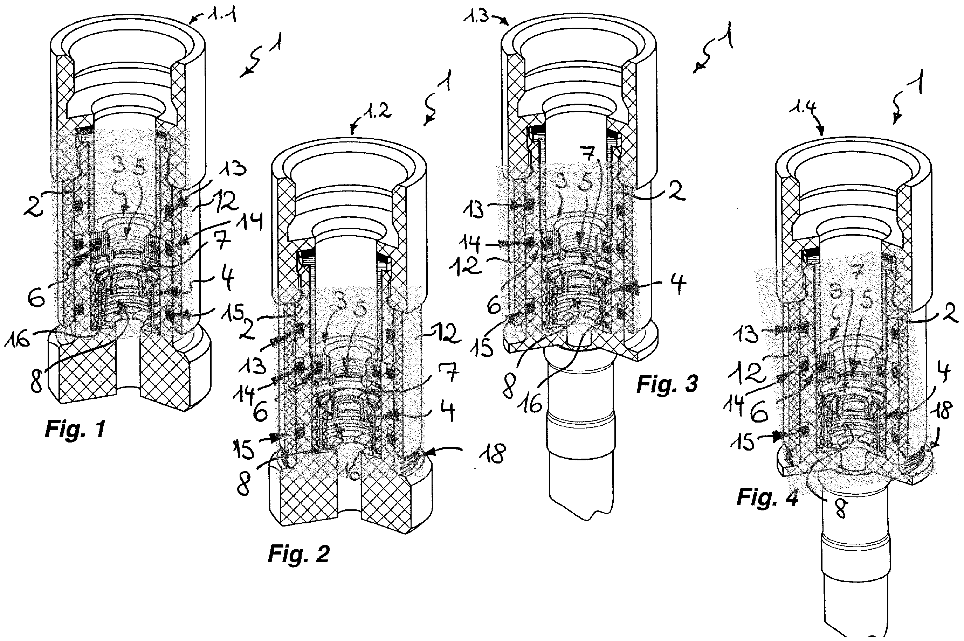

- Fig. 1: ein Sicherheitsventil in einer teilgeschnittenen Perspektivdarstellung, welches Sicherheitsventil zum automatischen Absperren einer von einem Medium, insbesondere von Wasser, durchströmbaren Leitung für den Fall eines plötzlichen Leitungsbruchs dient, wobei in diesem Sicherheitsventil ein Absperrkörper vorgesehen ist, der mittels einem elastischen Rückhalteelement und insbesondere mittels einer Rückhaltefeder gegen die Kraft des durchströmenden Mediums in der hier dargestellten Offenstellung des Sicherheitsventils gehalten wird, und wobei zumindest ein By-Pass-Kanal vorgesehen ist, der mittels einem außenseitig manuell betätigbaren Schiebeelement derart öffenbar ist, dass der ByPass-Kanal die Zuströmseite des Absperrkörpers mit dessen Abströmseite verbindet, bis der Absperrkörper sich bei erfolgtem Druckausgleich über den zumindest einen By-Pass-Kanal in die Offenstellung bewegt,
- Fig. 2: ein ebenfalls in einer teilgeschnittenen Perspektivdarstellung gezeigtes und mit Fig. 1 vergleichbares Sicherheitsventil in seiner Offenstellung, wobei das außenseitig manuell betätigbare Schiebeelement hier gegen die Rückstellkraft eines Rückstellelements und insbesondere einer Rückstellfeder von einer Kanal-Schließstellung in eine Kanal-Offenstellung bewegbar ist,
- Fig. 3: ein ebenfalls in einer teilgeschnittenen Perspektivdarstellung gezeigtes und mit Fig. 1 vergleichbares Sicherheitsventil, das hier zuströmseitig einen Rohrleitungsanschluss mit einem Innengewinde und abströmseitig einen Schlauchanschluss zum Anschluss an einer flexiblen Schlauchleitung aufweist,
- Fig. 4: ein ebenfalls in einer längsgeschnittenen Perspektivdarstellung dargestelltes und mit Fig. 3 vergleichbares Sicherheitsventil, dessen außenseitig manuell betätigbares Schiebeelement gegen die Rückstellkraft einer Rückstellfeder von der KanalSchließstellung in die Kanal-Offenstellung bewegbar ist,
- Fig. 5: das Sicherheitsventil aus Fig. 1 in einem vergrößerten Längschnitt in seiner Offenstellung,
- Fig. 6: das ebenfalls längsgeschnittene Sicherheitsventil aus Fig. 5 in seiner, durch einen plötzlichen Druckabfall auf der Abströmseite des Absperrkörpers ausgelösten Schließstellung, in welcher eine im Absperrkörper vorgesehene und hier zentral angeordnete Ventilöffnung durch einen vom Absperrkörper beaufschlagten Schließkörper dicht verschlossen wird,
- Fig. 7: das längsgeschnittene und ebenfalls in seiner Schließstellung befindliche Sicherheitsventil aus Fig. 5 und 6 bei einem, von der Zuströmseite her kommenden Druckstoß, bei dem der als Dämpfungskolben wirkende Schließkörper zusätzlich gegen ein federelastisches Andruckelement gepresst wird,
- Fig. 8: das noch in der Schließstellung befindliche Sicherheitsventil aus den Fig. 5 bis 7, wobei der ByPass-Kanal durch eine Längsverschiebung des manuell betätigbaren Schiebeelements bereits geöffnet wurde, um einen Druckausgleich auf der Abströmseite und auf der Zuströmseite des Absperrkörpers zu bewirken,
- Fig. 9: das Sicherheitsventil aus den Fig. 5 bis 8, dessen Absperrkörper sich nach erfolgtem Druckausgleich nun wieder in die Offenstellung des Sicherheitsventils bewegt hat, wobei sich das Schiebeelement noch in der Kanal-Offenstellung befindet,
- Fig. 10: das Sicherheitsventil aus den Fig. 5 bis 8, das nach Verschieben des Schiebelements und Schließen des By-Pass-Kanals nun wieder für ein erneutes Auslösen in der Offenstellung des Sicherheitsventils bereitgestellt ist,
- Fig. 11: das Sicherheitsventil aus den Fig. 1 und 5 bis 10 in einer auseinandergezogenen Einzelteildarstellung,
- Fig. 12: das Sicherheitsventil aus den Fig. 1 und 5 bis 11 in einer Seitenansicht,
- Fig. 13: das Sicherheitsventil aus Fig. 11 und 12 in einer längsgeschnittenen Seitenansicht,
- Fig. 14: das Sicherheitsventil aus Fig. 2 in einer auseinandergezogenen Einzelteildarstellung
- Fig. 15: das Sicherheitsventil aus den Fig. 2 und 14 in einer seitlichen Perspektivdarstellung,
- Fig. 16: das Sicherheitsventil aus den Fig. 2 sowie 14 bis 15 in einer längsgeschnittenen Seitenansicht,
- Fig. 17: das Sicherheitsventil aus Fig. 1 in der teilgeschnittenen Perspektivdarstellung,
- Fig. 18: eine Detaildarstellung des in Fig. 17 gezeigten Sicherheitsventils im Bereich des die Ventilöffnung im Absperrkörper verschließenden Schiebeelements,
- Fig. 19: das von einem hier als Druckfeder ausgebildeten Andruckelement beaufschlagte und in einer Führungshülse verschieblich geführte Schiebeelement des in Fig. 17 und 18 dargestellten Sicherheitsventils,
- Fig. 20: das bereits in den Fig. 1 und 5 bis 10 gezeigte Sicherheitsventil in seiner Schließstellung, in welcher der Absperrkörper mit seiner Ventilöffnung das Schiebelement dicht beaufschlagt, wobei das Schiebeelement sich hier noch in seiner Kanal-Schließstellung befindet,
- Fig. 21: das Sicherheitsventil aus Fig. 20, wobei das Schiebeelement hier bereits in die Kanal-Offenstellung verschoben wurde, um eine Druckausgleich auf der Abströmseite und auf der Zuströmseite der Absperrkörpers zu bewirken,
- Fig. 22: das Sicherheitsventil aus Fig. 20 und 21 nach erfolgtem Druckausgleich beidseits des Absperrkörpers, wobei dieser Druckausgleich eine Rückstellbewegung des Absperrkörpers in die Offenstellung des Sicherheitsventils bewirkt,
- Fig. 23: ein Anwendungsbeispiel des hier gezeigten Sicherheitsventils, wobei in die zu einem Handwaschbecken führende Warm- und Kaltwasserleitung jeweils ein Sicherheitsventil zwischengeschaltet ist,
- Fig. 24: ein weiteres Anwendungsbeispiel, bei dem ein Sicherheitsventil in die zu einem Handwaschbecken führende Wasserleitung zwischengeschaltet ist,
- Fig. 25: ein Anwendungsbeispiel, bei welchem das Sicherheitsventil in die zu einer Waschmaschine führende Wasserleitung zwischengeschaltet ist,
- Fig. 26: ein Anwendungsbeispiel, bei dem das Sicherheitsventil in die zu einer Geschirrspülmaschine führende Wasserleitung zwischengeschaltet ist, und
- Fig. 27: ein Anwendungsbeispiel, bei welchem das erfindungsgemäße Sicherheitsventil in die zum Spülkasten einer Toilettenspülung führende Wasserleitung zwischengeschaltet ist.

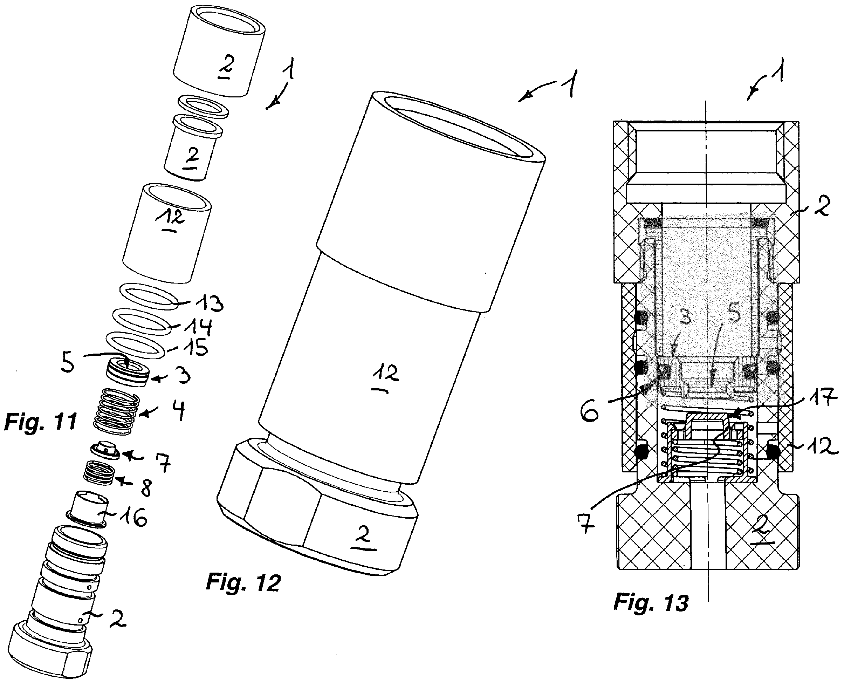

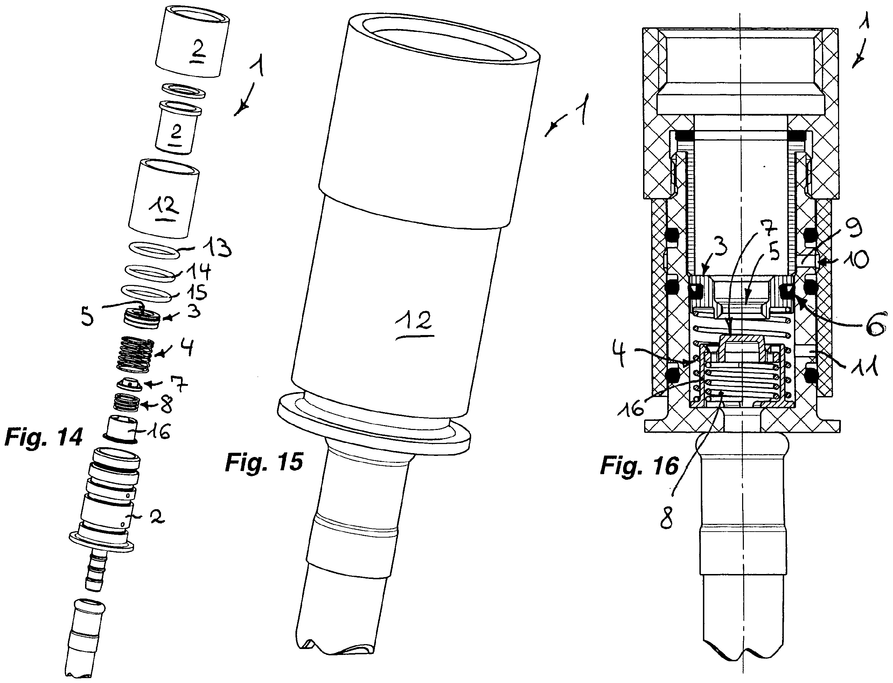

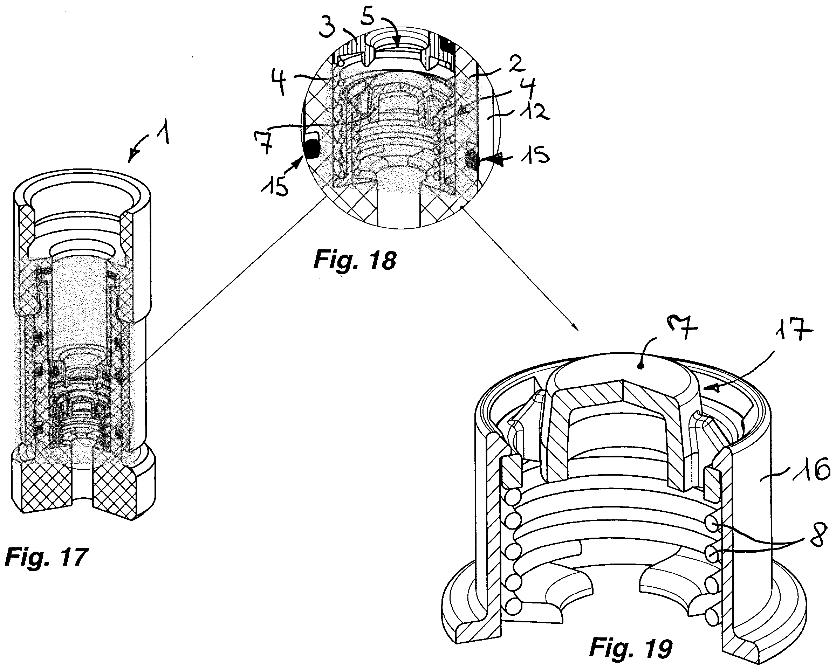

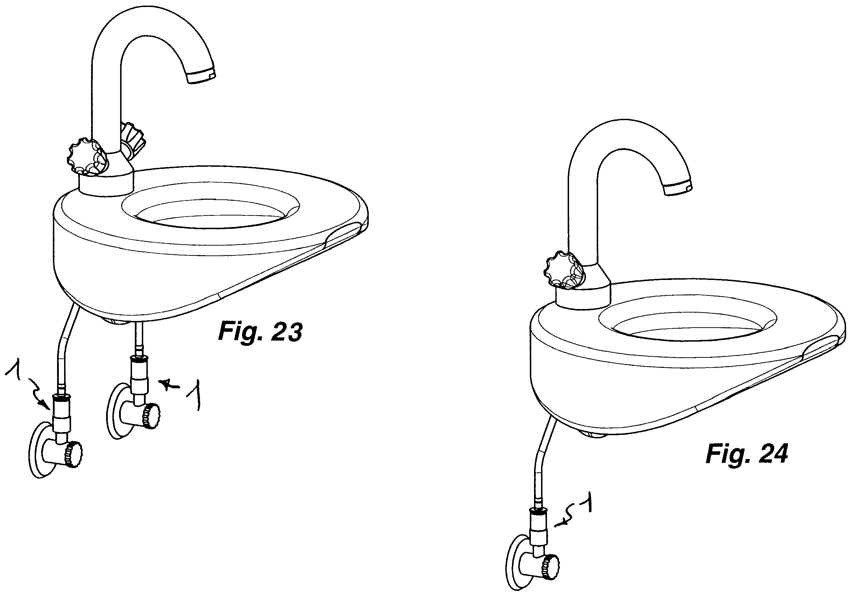

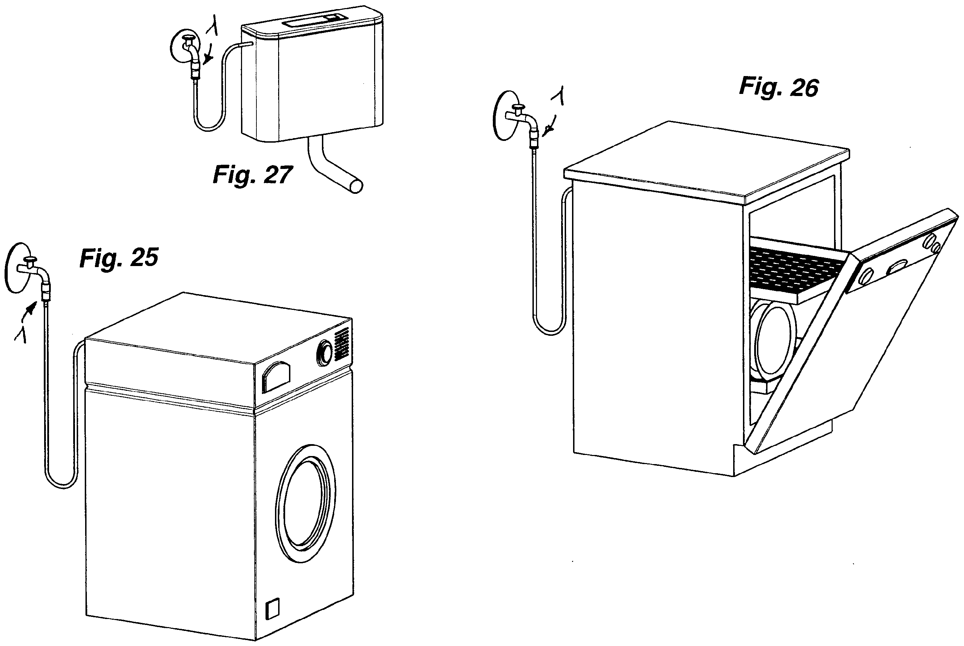

In den Fig. 1 bis 27 ist ein Sicherheitsventil 1 in verschiedenen Ausführungen 1.1, 1.2, 1.3 und 1.4 dargestellt. Das Sicherheitsventil 1 dient zum automatischen Absperren einer Leitung, die von einem Medium und insbesondere von Wasser durchströmt wird. Das Sicherheitsventil 1 soll ein unkontrolliertes Auslaufen des Mediums verhindern, wenn ein auf der Abströmseite des Absperr- oder Sicherheitsventils 1 befindlicher Leitungsabschnitt plötzlich birst oder sonst wie undicht wird. Aus den Anwendungsbeispielen in den Fig. 23 bis 27 wird deutlich, dass das Sicherheitsventil 1 dazu beispielsweise in die Zufuhrleitung zu einem Verbraucher zwischengeschaltet werden kann.

Das Sicherheitsventil 1 weist ein hier hülsenförmiges Ventilgehäuse 2 auf, in dessen Gehäuseinnenraum ein Absperrkörper 3 vorgesehen ist. Dieser Absperrkörper 3 ist mittels wenigstens einem Rückhalteelement 4 gegen die Kraft eines durch das Ventilgehäuse 2 durchströmenden Mediums in seiner, in den Fig. 1 bis 5, 9 bis 10, 13, 16 und 17 gezeigten Offenstellung gehalten. In dieser Offenstellung des Sicherheitsventils kann das Medium eine hier zentral angeordnete Ventilöffnung 5 im Absperrkörper 3 durchströmen. Der Absperrkörper 3, der mit seinem Absperrkörper-Umfang an der Gehäuseinnenseite des Ventilgehäuses 2 verschieblich geführt ist, weist umfangsseitig eine Ringdichtung 6 auf, die zwischen dem Absperrkörper 3 einerseits und der Gehäuseinnenwandung des Ventilgehäuses 2 andererseits abdichtet. Das Rückhalteelement 4 ist federelastisches Halteelement und hier insbesondere als Druckfeder ausgebildet.

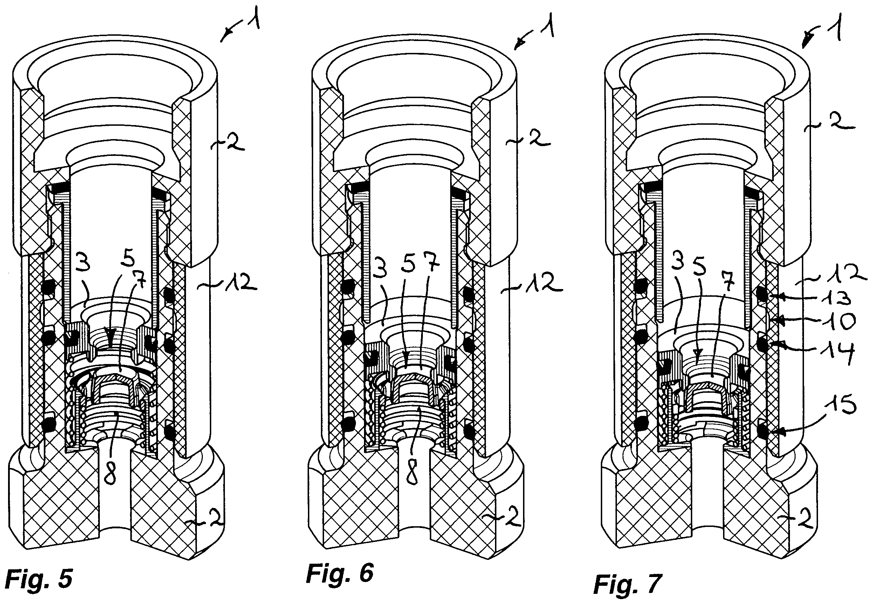

Aus einem Vergleich der Fig. 1 bis 5, 9 bis 10, 13, 16 und 17 einerseits und der Fig. 6 bis 8 und 20 bis 21 andererseits wird deutlich, dass der Absperrkörper 3 im Ventilgehäuse 2 verschieblich geführt ist. Bei einem plötzlichen Druckabfall in den auf der Abströmseite des Sicherheitsventils 1 angeordneten Leitungsabschnitten kann sich der Absperrkörper 3 im Ventilgehäuse 2 derart verschieben, dass sich dieser Absperrkörper 3 gegen einen Schließkörper 7 in die in den Fig. 6 bis 8 sowie 20 bis 21 gezeigte Schließstellung des Sicherheitsventils 1 bewegt, in welcher Schließstellung der von mindestens einem elastischen Andruckelement 8 beaufschlagte Schließkörper 7 die Ventilöffnung 5 im Absperrkörper 3 dicht verschließt. Das Andruckelement 8 ist hier als federelastisches Andruckelement und insbesondere als Druckfeder ausgebildet.

Der Schließkörper 7 wirkt hier als Dämpfungskolben, wenn der Absperrkörper 3 durch zusätzliche Druckstöße von der Zuströmseite des Sicherheitsventils 1 aus belastet wird.

Es ist ein besonderer Vorteil des hier dargestellten Sicherheitsventils 1, dass es auch von einer ungeübten Person ggf. auch ohne spezielles Werkzeug wieder in die Offenstellung des Sicherheitsventils 1 bewegt werden kann, wenn das Sicherheitsventil 1 ausgelöst hatte und der auslösende Umstand geklärt und beseitigt werden konnte. Dazu ist ein By-Pass-Kanal vorgesehen, der hier durch die Kanalabschnitte 9, 10 und 11 gebildet wird. In der Schließstellung des Sicherheitsventils 1 ist der By-Pass-Kanal derart öffenbar, dass er die Zuströmseite des Absperrkörpers 3 mit dessen Abströmseite verbindet, bis der Absperrkörper 3 sich bei erfolgtem Druckausgleich über den zumindest einen By-Pass-Kanal in die Offenstellung des Sicherheitsventils 1 bewegt.

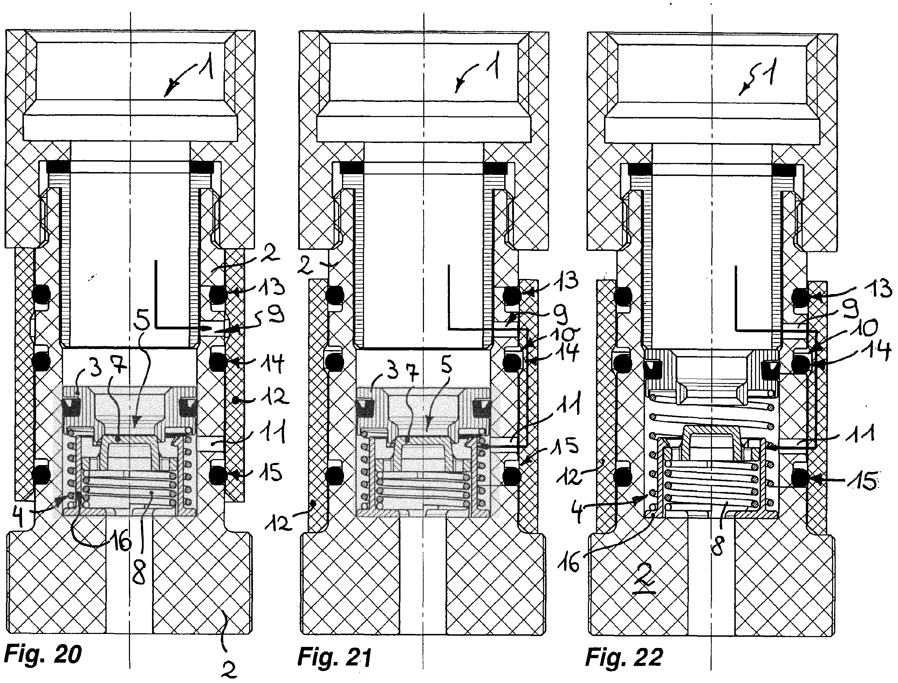

Insbesondere aus den vergrößerten Darstellungen in den Fig. 20 bis 22 wird deutlich, dass die mündungsseitigen Kanalabschnitte 9 und 11 als Durchströmlöcher im Ventilgehäuse 2 ausgebildet sind, und dass diese mündungsseitigen Kanalabschnitte 9 und 11 über den dazwischenliegenden Kanalabschnitt 10 verbindbar sind, den ein hülsenförmiges und auf dem Außenumfang des Ventilgehäuses 2 verschieblich geführtes Schiebeelement 12 begrenzt. Dazu ist im Schiebeelement 12 innenseitig eine umlaufende Ringnut 10' vorgesehen, die nur in der in Fig. 21 gezeigten Kanal-Offenstellung die Kanalabschnitte 9, 10 und 11 miteinander verbindet, während in der Kanal-Schließstellung diese Ringnut 10' zwischen zwei Ringdichtungen 13, 14 angeordnet ist und wirkungslos bleibt. Diese Ringdichtungen 13, 14 sind mit Abstand voneinander am Außenumfang des Ventilgehäuses 2 angeordnet und so plaziert, dass zwischen ihnen die außenseitige Öffnung des Kanalabschnitts 9 vorgesehen ist.

Diese Ringdichtungen 13, 14 dichten den Ringspalt zwischen dem Schiebeelement 12 und dem Gehäuseaußenumfang des Ventilgehäuses 2 in diesem Bereich ab. Am Außenumfang des Ventilgehäuses 2 ist eine weitere Ringdichtung 15 vorgesehen, die den Ringspalt auf der der Ringdichtung 14 abgewandten Seite der außenseitigen Öffnung des Kanalabschitts 11 abdichtet.

In dem Ventilgehäuse 2 des Sicherheitsventils 1 ist der Absperrkörper 3 und der Schließkörper 7 vorgesehen. Im Ventilgehäuse 2 befinden sich die Kanalabschnitte 9, 11, die oberhalb und unterhalb des Absperrkörpers 2 angeordnet sind. Um einen Druckausgleich im Ventilgehäuse 2 auf beiden Seiten des Absperrkörpers 3 zu erreichen, ist das hülsenförmige Schiebeelement 12 am Außenumfang des Ventilgehäuses 2 derart verschieblich geführt, dass die Kanalabschnitte 9 und 11 mit dem sie verbindenden Kanalabschnitte 10 verbunden und der By-Pass-Kanal in seine Kanal-Offenstellung bewegt werden kann. Das hier dargestellte Sicherheitsventil 1 weist ein Ventilgehäuse 2 auf, das vorzugsweise an die Geometrie der eingesetzten Leitung angepasst ist. In dem Ventilgehäuse 2 ist der als Schließkolben ausgestaltete Absperrkörper 3 relativ zur Längsrichtung des Ventilgehäuses 2 mittels dem Rückhalteelement 4 verschieblich geführt. Das Rückhalteelement 4 wirkt entgegen der Strömizngsrichtung des durch das Ventilgehäuse 2 durchströmenden Mediums, wobei der Absperrkörper 3 gegenüber der Gehäuseinnenwandung abgedichtet ist. Der Schließkörper 7 bildet einen Dämpferkolben, der innerhalb des Ventilgehäuses 2 in Durchströmrichtung des Mediums unterhalb des Absperrkörpers 3 in einem separaten Dämpfergehäuse angeordnet ist. Das für den Schließkörper 7 vorgesehene Dämpfergehäuse wird hier durch eine Führungshülse 16 gebildet, über deren dem Absperrkörper 2 zugewandten Hülsenrand der Schließkörper 7 mit einem hutförmigen Schließkörper-Teilbereich 17 vorsteht. Die Führungshülse 16 wird ihrerseits durch das als Wendelfeder ausgebildete Rückhalteelement 4 umgriffen, das auf der gegenüberliegenden Seite den Absperrkörper 3 abstützt.

Das Ventilgehäuse weist im Bereich oberhalb und unterhalb des als Schließkolben ausgestalteten Absperrkörpers 3 jeweils die Kanalabschnitte 9 und 11 des By-Pass-Kanals auf. Am Außenumfang des Ventilgehäuses 2 sind beidseits des oberhalb des Absperrkörpers 3 befindlichen Kanalabschnitts 9 die elastischen Ringdichtungen 13, 14 angeordnet, von denen sich der eine Dichtungsring 13 auf der einen Seite des Kanalabschnitts 9 und der andere Dichtungsring 14 auf der anderen Seite des Kanalabschnitts 9 befindet. Die weitere Ringdichtung 15 ist mit Abstand vom Dichtungsring 14 auf dessen dem Dichtungsring 13 abgewandten Seite angeordnet.

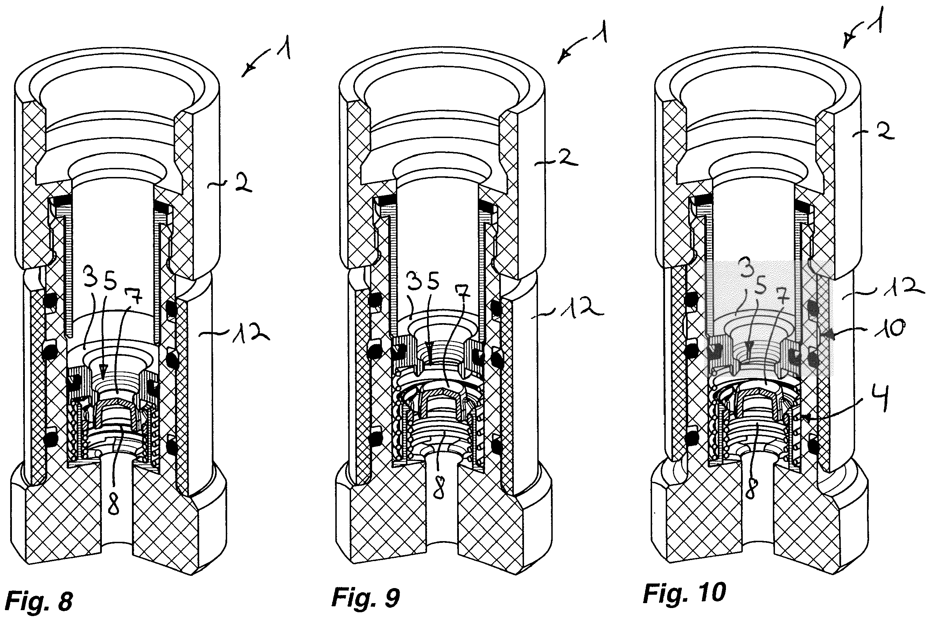

In den Figuren 1 bis 5, 9 bis 10, 13, 16 und 22 ist das Sicherheitsventil 1 in einem Betriebsmodus gezeigt, der im Fall intakter Leitungen vorherrscht. Demgegenüber zeigen die Figuren 6 bis 8, sowie 20 und 21 das Sicherheitsventil in seiner Schließstellung, die im Falle eines gebrochenen Leitungsabschnitts auf der Abströmseite des Sicherheitsventils 1 ausgelöst wurde. In Figur 7 ist das Sicherheitsventil 1 in einem ausgelösten, gleichzeitig aber auch gedämpften Zustand gezeigt. In den Figuren 8 bis 10 und 20 bis 22 ist das Sicherheitsventil 1 in einer Abfolge dargestellt, bei der eine Wiederinbetriebnahme des Betriebsmodus eingeleitet wird. In den Figuren 9 und 10 sowie 21 und 22 wird ein Druckausgleich zwischen der Zuström- und der Abströmseite des Absperrkörpers 2 eingeleitet oder ist bereits erfolgt, derart, dass anschließend das Sicherheitsventil 1 wieder in seinem Betriebsmodus zur Verfügung steht.

Während des beispielsweise in den Figuren 1 bis 5 gezeigten Betriebsmodus sind die Kanalabschnitte 9, 10 und 11 des By-Pass-Kanals nicht miteinander verbunden und der By-Pass-Kanal entsprechend verschlossen. Kommt es zu einer Leitungsunterbrechung auf der Abströmseite des Sicherheitsventils 1, entsteht damit zwangsläufig ein Druckunterschied zwischen dem zulaufseitigen Bereich des Absperrkörpers 3 und dessen auslaufseitigem Bereich, wodurch sich das Sicherheitsventil 1 praktisch automatisch in seine, beispielsweise in Figur 6 bis 8 gezeigte Schließstellung bewegt. In dieser Schließstellung liegt der Absperrkörper 3 mit seiner Ventilöffnung dicht am Schließkörper 7 an und der durch das Sicherheitsventil 1 führende Strömungsweg ist verschlossen. Bei der in Figur 6 gezeigten Auslösung des Sicherheitsventils 1 kann eine weitere Krafteinwirkung auf den Absperrkörper 3 und ein entsprechender Impuls erfolgen. In diesem Fall liegt der in Figur 7 dargestellte Zustand vor, bei dem der Schließkörper 7 zusätzlich die Funktion eines Dämpferkolbens hat. Wird der Schließkörper 7 als Dämpfer wirksam, wirkt er der zusätzlichen Kraft des Absperrkörpers 3 entgegen, derart, dass auf jeden Fall ein sicherer Verschluss zwischen dem Absperrkörper 3 und dem Schließkörper 7 gewährleistet ist. Der Schließkörper 7 befindet sich in dem durch die Führungshülse 16 gebildeten separaten Gehäuse, das am auslaufseitigen Ende des Ventilgehäuses 2 im Gehäuseinneren vorgesehen ist. Der Schließkörper 7 ist mit Hilfe des in der Führungshülse 16 befindlichen federelastischen Andruckelementes in Abhängigkeit von dem durch den Absperrkörper 3 ausgeübten Druck in der Führungshülse 16 verschiebbar.

Wie beispielsweise aus einem Vergleich der Figuren 8 und 9 sowie 21 und 22 deutlich wird, kann durch axiales Verschieben des an der Gehäuseaußenseite des Ventilgehäuses 2 verschieblich geführten hülsenförmigen Schiebeelementes 12 ein Öffnen des By-Pass-Kanals durch Verbinden der Kanalabschnitte 9, 10 und 11 bewirkt werden. Dadurch wird ein Druckausgleich durch den vorhandenen Leitungsdruck beidseits des Absperrkörpers 3, bezogen auf die Strömungsrichtung des Mediums, ermöglicht. Das Schiebeelement 12 muss sich für die gesamte Dauer bis zu einem erfolgten Druckausgleich in dieser Position befinden, damit der By-Pass-Kanal geöffnet bleibt.

In den Figuren 9, 10 und 22 ist das Sicherheitsventil 1 nach erfolgtem Druckausgleich dargestellt. Um das Sicherheitsventil wieder in seinen üblichen Betriebsmodus gemäß beispielsweise den Figuren 1 bis 4 zurückzuversetzen, wird das Schiebeelement 12 derart verschoben, dass die Kanalabschnitte 9, 10 und 11 nicht mehr verbunden sind und der By-Pass-Kanal wieder verschlossen wird. Eine komplette Demontage des Sicherheitsventils 1 ist somit nicht nötig, um den normalen Betriebszustand, beispielsweise nach Behebung möglicher Leitungsschäden, wiederherzustellen.

Statt der hier dargestellten Schiebebewegung am Schiebeelement 12 ist es auch möglich, bei entsprechend geänderter Ausführung den By-Pass-Kanal durch Drück-, Verdreh- oder Verkippbewegungen zu öffnen und zu schließen.

Besonders vorteilhaft ist es, wenn ein akustisches und/oder optisches Signal erfolgt, sobald im Ventilgehäuse 2 ein Druckausgleich beidseits des Absperrkörpers 3 erfolgt ist. Bei den in den Figuren 2 und 4 gezeigten Ausführungen 1.2 und 1.4 des Sicherheitsventils 1 ist ein vorzugsweise federelastisches und insbesondere als Wendelfeder ausgebildetes Rückstellelement 18 vorgesehen, welches das Schiebeelement 12 von der Kanal-Offenstellung wieder zurück in die Kanal-Schließstellung bewegt. Bei dieser Ausführung wird die Rückstellung des hülsenförmigen Schiebeelements 12 bereits durch manuelles Lösen des Schiebeelements 12 erreicht, so dass sich ein Zurückschieben dieses Schiebeelements 12 von Hand erübrigt. Weitere akustische und/oder optische Signale können vorteilhaft sein, wenn das Sicherheitsventil 1 von seiner Offenstellung in seine Schließstellung auslöst oder wenn das Schiebeelement 12 aufgrund von Druckimpulsen als Dämpferkolben wirksam wird.

Möglich ist auch, dass das hier für Schließkörper 7 vorgesehe und durch die Führungshülse 16 gebildete Gehäuse einstückig an das Ventilgehäuse 2 des Sicherheitsventils 1 angeformt ist. Eine andere, hier nicht gezeigte Ausführung kann vorsehen, dass in dem Ventilgehäuse 2 des Sicherheitsventils 1 eine Einsetzkartusche einsetzbar ist, die aus dem Schließkörper 7, dem Andruckelement 8, dem für den Schließkörper 7 vorgesehenen Gehäuse sowie einem Dämpferkolben und einer Dämpferfeder besteht.

Nach einer weiteren, hier nicht gezeigten Ausführung der Erfindung können der als Dämpferkolben vorgesehene Schließkörper 7 und/oder der Absperrkörper 3 derart im Ventilgehäuse 2 des Sicherheitsventils 1 vorgesehen sein, dass eine Bewegung der genannten Komponenten ohne Verschiebung und ohne Verwendung von Wendelfedern erfolgen kann, beispielsweise, indem die Abdichtung des Absperrkörpers 3 gegenüber der Gehäuseinnenwandung des Ventilgehäuses 2 stets die gleiche Lageposition beibehält, während der Absperrkörper 3 eine axiale Bewegung innerhalb des Ventilgehäuses 2 des Sicherheitsventils 1 in Abhängigkeit vom Druck des durchströmenden Mediums vollzieht. Dies wird beispielsweise durch die Verwendung eines entsprechend elastischen Materials, aus dem der Absperrkörper 3 besteht, erreicht. Es ist weiterhin möglich, dass der Absperrkörper 3 aus einer Kombination aus elastischem und nicht-elastischem Material besteht.

Aus den Anwendungsbeispielen in den Figuren 23 bis 27 ist erkennbar, dass das hier gezeigte Sicherheitsventil 1 beispielsweise im Sanitär- als auch im Haushaltsbereich eingesetzt werden kann. Dabei lässt sich das Sicherheitsventil 1 in allen Leitungen einsetzen, in denen irgendein Medium und insbesondere ein Fluid, wie beispielsweise Wasser oder Gas, zu führen ist. Das Sicherheitsventil 1 schützt diese Leitungen gegen eine plötzliche Leckage und gegen ein unkontrolliertes Auslaufen des darin geführten Mediums.

## Patentansprüche

1. Sicherheitsventil (1) mit einem Ventilgehäuse (2), in dessen Gehäuseinnenraum ein Absperrkörper (3) vorgesehen ist, der (3) mittels wenigstens einem elastischen Rückhalteelement (4) gegen die Kraft eines durch das Ventilgehäuse (2) durchströmenden Fluids in einer Offenstellung des Sicherheitsventils (1) gehalten ist, in der das Fluid eine Ventilöffnung (5) im Absperrkörper (3) durchströmt, und welcher Absperrkörper (3) im Ventilgehäuse (2) derart verschiebbar ist, dass dieser Absperrkörper (3) sich bei einem Druckabfall auf seiner Abströmseite gegen einen Schließkörper (7) in eine Schließstellung des Sicherheitsventils (1) bewegt, in der der von mindestens einem elastischen Andruckelement (8) beaufschlagte Schließkörper (7) die Ventilöffnung (5) im Absperrkörper (3) verschließt, wobei zumindest ein By-Pass-Kanal vorgesehen ist, der in der Schließstellung des Sicherheitsventils (1) derart öffenbar ist, dass er die Zuströmseite des Absperrkörpers (3) mit dessen Abströmseite verbindet, bis der Absperrkörper (3) sich bei erfolgtem Druckausgleich über den zumindest einen By-Pass-Kanal in die Offenstellung des Sicherheitsventils (1) bewegt, wobei das mindestens eine Andruckelement (8) mit seinem dem Absperrkörper (3) abgewandten Teilbereich in einer im Gehäuseinnenraum des Ventilgehäuses (2) angeordneten Führungshülse (16) verschieblich geführt ist.

2. Sicherheitsventil nach Anspruch 1, **dadurch gekennzeichnet, dass** das wenigstens eine Rückhalteelement (4) als federelastisches Rückhalteelement ausgebildet ist.

3. Sicherheitsventil nach Anspruch 2, **dadurch gekennzeichnet, dass** das wenigstens eine Rückhalteelement (4) als Wendelfeder ausgebildet ist.

4. Sicherheitsventil nach einem der Ansprüche 1 bis 3, **dadurch gekennzeichnet, dass** das mindestens eine Andruckelement (8) als federelastisches Andruckelement ausgebildet ist.

5. Sicherheitsventil nach Anspruch 4, **dadurch gekennzeichnet, dass** das mindestens eine Andruckelement (8) als Wendelfeder ausgebildet ist.

6. Sicherheitsventil nach einem der Ansprüche 3 bis 5, **dadurch gekennzeichnet, dass** das als Wendelfeder ausgestaltete Rückhalteelement (4) die Führungshülse (16) umgreift.

7. Sicherheitsventil nach einem der Ansprüche 1 bis 6, **dadurch gekennzeichnet, dass** die Ventilöffnung (5) zentral im Absperrkörper (3) und vorzugsweise koaxial zu dessen Absperrkörper-Längsachse angeordnet ist.

8. Sicherheitsventil nach einem der Ansprüche 1 bis 7, **dadurch gekennzeichnet, dass** der By-Pass-Kanal drei Kanalabschnitte (9, 10, 11) hat, von denen die mündungsseitigen Kanalabschnitte (9, 11) als Durchströmlöcher im Ventilgehäuse (2) ausgebildet sind, und dass die mündungsseitigen Kanalabschnitte (9, 11) über den dazwischenliegenden Kanalabschnitt (10) verbindbar sind, den ein hülsenförmiges und auf dem Außenumfang des Ventilgehäuses (2) verschieblich geführtes Schiebeelement (12) be- oder umgrenzt.

9. Sicherheitsventil nach Anspruch 8, **dadurch gekennzeichnet, dass** das Schiebeelement (12) auf dem Außenumfang des Ventilgehäuses (2) von der Schließstellung gegen eine Rückstellkraft zumindest eines Rückstellelements (18) in die Offenstellung des Sicherheitsventils (1) verschiebbar ist.

10. Sicherheitsventil nach Anspruch 9, **dadurch gekennzeichnet, dass** das zumindest eine Rückstellelement (18) als federelastisches Rückstellelement ausgebildet ist.

11. Sicherheitsventil nach Anspruch 10, **dadurch gekennzeichnet, dass** das zumindest eine Rückstellelement (18) als Wendelfeder ausgebildet ist.

12. Sicherheitsventil nach Anspruch 10 oder 11, **dadurch gekennzeichnet, dass** das vom Rückstellelement (18) in die Offenstellung bewegte Schiebeelement (12) an einem Schiebeanschlag anschlägt.

13. Sicherheitsventil nach einem der Ansprüche 1 bis 12, **dadurch gekennzeichnet, dass** das Ventilgehäuse (2) zuströmseitig einen Armaturenanschluss und/oder abströmseitig einen Schlauchanschluss aufweist.

14. Sicherheitsventil nach Anspruch 13, **dadurch gekennzeichnet, dass** das Ventilgehäuse (2) an seinem zuströmseitigen Armaturenanschluss mit einer Versorgungsleitung verbunden ist.

## Claims

1. Safety valve (1) comprising a valve housing (2), in the housing interior of which a shut-off body (3) is provided, said shut-off body (3) being held by means of at least one elastic retaining element (4) against the force of a fluid flowing through the valve housing (2) in an open position of the safety valve (1), in which the fluid flows through a valve opening (5) in the shut-off body (3), and which shut-off body (3) is displaceable in the valve housing (2) in such a manner that, in case of a pressure drop on its outflow side, this shut-off body (3) moves against a closing body (7) into a closed position of the safety valve (1), in which the closing body (7), which is acted upon by at least one elastic pressing element (8), closes the valve opening (5) in the shut-off body (3), wherein at least one bypass duct is provided which, in the closed position of the safety valve (1), can be opened such that it connects the inflow side of the shut-off body (3) to the outflow side thereof until the shut-off body (3), when the pressure has been equalised by the at least one bypass duct, moves into the open position of the safety valve (1), wherein the at least one pressing element (8) is guided displaceably with its sub-region facing away from the shut-off body (3) in a guide sleeve (16) arranged in the housing interior of the valve housing (2).

2. Safety valve as claimed in claim 1, **characterised in that** the at least one retaining element (4) is designed as a resilient retaining element.

3. Safety valve as claimed in claim 2, **characterised in that** the at least one retaining element (4) is designed as a helical spring.

4. Safety valve as claimed in any one of claims 1 to 3, **characterised in that** at least one pressing element (8) is designed as a resilient pressing element.

5. Safety valve as claimed in claim 4, **characterised in that** the at least one pressing element (8) is designed as a helical spring.

6. Safety valve as claimed in any one of claims 3 to 5, **characterised in that** the retaining element (4) configured as a helical spring engages around the guide sleeve (16).

7. Safety valve as claimed in any one of claims 1 to 6, **characterised in that** valve opening (5) is arranged centrally in the shut-off body (3) and preferably coaxially with respect to its shut-off body longitudinal axis.

8. Safety valve as claimed in any one of claims 1 to 7, **characterised in that** the bypass duct has three duct portions (9, 10, 11), of which the outlet-side duct portions (9, 11) are designed as through-flow holes in the valve housing (2), and **in that** the outlet-side duct portions (9, 11) can be connected via the duct portion (10) located therebetween which is delimited or bounded by a sleeve-shaped sliding element (12) guided displaceably on the outer circumference of the valve housing (2).

9. Safety valve as claimed in claim 8, **characterised in that** the sliding element (12) on the outer circumference of the valve housing (2) is displaceable from the closed position against a return force of at least one return element (18) into the open position of the safety valve (1).

10. Safety valve as claimed in claim 9, **characterised in that** the at least one return element (18) is designed as a resilient return element.

11. Safety valve as claimed in claim 10, **characterised in that** the at least one return element (18) is designed as a helical spring.

12. Safety valve as claimed in claim 10 or 11, **characterised in that** the sliding element (12) moved by the return element (18) into the open position butts against a sliding stop.

13. Safety valve as claimed in any one of claims 1 to 12, **characterised in that** valve housing (2) has a fitting connection on the inflow side and/or a hose connection on the outflow side.

14. Safety valve as claimed in claim 13, **characterised in that** the valve housing (2) is connected to a supply line at its inflow-side fitting connection.

## Revendications

1. Soupape de sécurité (1) avec un boîtier de soupape (2), dans l'espace intérieur de boîtier duquel il est prévu un obturateur (3) qui (3) est maintenu dans une position d'ouverture de la soupape de sécurité (1) au moyen d'au moins un élément de rappel élastique (4) contre la force d'un fluide s'écoulant à travers le boîtier de soupape (2), position dans laquelle le fluide s'écoule à travers une ouverture de soupape (5) dans l'obturateur (3) et ledit obturateur (3) est déplaçable dans le boîtier de soupape (2) de telle manière que ce l'obturateur (3) se déplace, dans le cas d'une chute de pression sur son côté aval, contre un corps de fermeture (7) dans une position de fermeture de la soupape de sécurité (1), dans laquelle le corps de fermeture (7) pressé par au moins un élément de pression élastique (8) ferme l'ouverture de soupape (5) dans l'obturateur (3), dans laquelle il est prévu au moins un canal de dérivation, qui peut être ouvert dans la position de fermeture de la soupape de sécurité (1), de telle manière qu'il relie le côté amont de l'obturateur (3) à son côté aval, jusqu'à ce que l'obturateur (3) se déplace dans la position d'ouverture de la soupape de sécurité (1) après que l'équilibre de pression a été atteint par ledit au moins un canal de dérivation, dans laquelle ledit au moins un élément de pression (8) est guidé de façon coulissante avec sa région partielle tournée vers l'obturateur (3) dans une douille de guidage (16) disposée dans l'espace intérieur de boîtier du boîtier de soupape (2).

2. Soupape de sécurité selon la revendication 1, **caractérisée en ce que** ledit au moins un élément de rappel (4) est réalisé sous forme d'élément de rappel à ressort élastique.

3. Soupape de sécurité selon la revendication 2, **caractérisée en ce que** ledit au moins un élément de rappel (4) est formé par un ressort hélicoïdal.

4. Soupape de sécurité selon l'une quelconque des revendications 1 à 3, **caractérisé en ce que** ledit au moins un élément de pression (8) est réalisé sous forme d'élément de pression à ressort élastique.

5. Soupape de sécurité selon la revendication 4, **caractérisée en ce que** ledit au moins un élément de pression (8) est formé par un ressort hélicoïdal.

6. Soupape de sécurité selon l'une quelconque des revendications 3 à 5, **caractérisée en ce que** l'élément de rappel (4) formé par un ressort hélicoïdal entoure la douille de guidage (16).

7. Soupape de sécurité selon l'une quelconque des revendications 1 à 6, **caractérisée en ce que** l'ouverture de soupape (5) est disposée au centre dans l'obturateur (3) et est de préférence coaxiale à son axe longitudinal de l'obturateur.

8. Soupape de sécurité selon l'une quelconque des revendications 1 à 7, **caractérisée en ce que** le canal de dérivation comporte trois parties de canal (9, 10, 11), dont les parties de canal à l'embouchure (9, 11) sont formées par des trous d'écoulement dans le boîtier de soupape (2), et **en ce que** les parties de canal à l'embouchure (9, 11) peuvent être reliées par les parties de canal intermédiaires (10), qu'un élément coulissant (12) en forme de douille et guidé de façon coulissante sur la périphérie extérieure du boîtier de soupape (2) délimite ou entoure.

9. Soupape de sécurité selon la revendication 8, **caractérisée en ce que** l'élément coulissant (12) peut coulisser sur la périphérie extérieure du boîtier de soupape (2) de la position de fermeture contre une force de rappel d'au moins un élément de rappel (18) à la position d'ouverture de la soupape de sécurité (1).

10. Soupape de sécurité selon la revendication 9, **caractérisée en ce que** ledit au moins un élément de rappel (18) est formé par un élément de rappel à ressort élastique.

11. Soupape de sécurité selon la revendication 10, **caractérisée en ce que** ledit au moins un élément de rappel (18) est formé par un ressort hélicoïdal.

12. Soupape de sécurité selon la revendication 10 ou 11, **caractérisée en ce que** l'élément coulissant (12) déplacé dans la position d'ouverture par l'élément de rappel (18) bute sur une butée coulissante.

13. Soupape de sécurité selon l'une quelconque des revendications 1 à 12, **caractérisée en ce que** le boîtier de soupape (2) présente à l'amont un raccord de robinetterie et/ou à l'aval un raccord de tuyau flexible.

14. Soupape de sécurité selon la revendication 13, **caractérisée en ce que** le boîtier de soupape (2) est raccordé par son raccord de robinetterie amont à une conduite d'alimentation.
